# EUROPÄISCHE PATENTSCHRIFT

(11) **EP 2 118 330 B1**
(45) Veröffentlichungstag und Bekanntmachung des Hinweises auf die Patenterteilung: **31.08.2011**
(21) Anmeldenummer: 08707182.5
(22) Anmeldetag: 22.01.2008
(51) Int. Cl.: C23C 2/00, F16C 23/04

(54) **ROLLENLAGER**
ROLLER BEARING
PALIER À ROULEAUX

(30) Priorität: 16.02.2007 DE 102007008307; 28.08.2007 DE 102007040584; 21.11.2007 DE 102007055625
(43) Veröffentlichungstag der Anmeldung: 18.11.2009
(73) Patentinhaber: SMS Siemag AG, 40237 Düsseldorf (DE)
(72) Erfinder: DE KOCK, Peter, 46117 Oberhausen (DE); JABS, Ronald, 47447 Moers (DE); ERWIG, Hermann, 46537 Dinslaken (DE)
(74) Vertreter: Klüppel, Walter
(86) Internationale Anmeldenummer: PCT/EP2008/000449
(87) Internationale Veröffentlichungsnummer: WO 2008/098661

(56) Entgegenhaltungen:
- WO-A-91/03581
- DE-A1- 10 130 959
- DE-A1- 10 227 778
- DE-A1- 19 511 943
- DE-B3- 10 236 113
- DE-U- 1 876 305

## Beschreibung

Die Erfindung betrifft ein Rollenlager zur Lagerung eines Rollenzapfens einer Rolle in einem Rollenarm einer Schmelztauchbeschichtungsanlage.

Bei Bandanlagen mit Schmelztauchbeschichtung für metallische Überzüge werden in den Beschichtungsbädem, nachfolgend Metallbäder genannt, Umlenkrollen, Korrigierrollen und Stabilisierungsrollen zur Führung des Bandes durch das Bad benutzt. Diese werden nach dem Stand der Technik in keramischen Gleitlagern gelagert. Beispiele hierfür sind in den Druckschriften DE 195 11 943 A1, DE 102 27 778 A1 und DE 102 36 113 B3 offenbart.

Bekannte Rollenlager sind in so genannten Rollearmen der Schmelztauchbeschichtungsanlage angeordnet, mit denen eine jeweilige Rolle in das Metallband eingetaucht wird. Die Rolle ist dabei über ihre Rollenzapfen in den Rollenlagern gelagert. Die in den Rollenarmen eingebauten Rollenlager sind im Stand der Technik in der Regel starr oder nur in einer Richtung beweglich aufgehängt. Bei Schiefstellungen zwischen dem Rollenzapfen und der Lageroberfläche, wie sie beispielsweise durch Ausrichtfehler oder thermische Deformationen auftreten können, liegt der Rollenzapfen nicht mehr vollständig auf dem Rollenlager auf. Die Folge sind höhere Flächenpressungen und damit verbunden ein höherer Verschleiß der Rollenlager.

Die deutsche Gebrauchsmusteranmeldung DE 1 876 305 bezieht sich auf ein Gelenklager zur Übertragung großer Radial- und Axialkräfte, bei welchem ein mit einer zylindrischen Lauffläche und einer konvex gewölbten Außenfläche versehener Innenring in einem mit einer entsprechend konkav gewölbten Innenfläche versehenen zweiten Ring gleitend gelagert ist. Die Ringe sind durch Zapfen um eine radiale Achse schwenkbar miteinander verbunden.

Die Druckschrift DE 101 30 959 offenbart eine Beschichtungsvorrichtung mit einer in einem Gleitlager drehbar gelagerten Welle zum Führen eines Metallbandes. Das Gleitlager wird von einem Lagergehäuse und einer darin enthaltenen offenen Lagerschale mit zwei Lagerflächen gebildet. Die beiden Lagerschalenhälften/Lagerflächen bestehen aus Keramikmaterial. Die beiden Lagerflächen mit sind ungefähr gleichwinklig zu beiden Seiten der kraftresultierenden R angeordnet.

DE 195 11 943 A1 offenbart ein Rollenlager zur Lagerung eines Rollenzapfens einer Rolle in einem Rollenarm einer Schmelztauchbeschichtungsanlage. Die Rolle ist mittels des Rollenarms in ein Metallbad eintauchbar und dient dort zur Führung eines das Metallbad durchlaufenden Bandes. Das Rollenlager ist bedingt, d. h. bezüglich zwei Freiheitsgraden, kardanisch ausgebildet. In dem Rollenarm ist eine Buchse mit einer Öffnung zur Aufnahme des Rollenzapfens gelagert. Außerdem ist ein Einbaustück und mindestens ein Lagerkörper für den Rollenzapfen vorgesehen.

Ausgehend von diesem Stand der Technik liegt der Erfindung die Aufgabe zugrunde, ein Rollenlager für Rollen in einer Schmetztauchbeschichtungsantage dahingehend weiter zu verbessern, dass die Lagerung des Rollenzapfens bzw. der Rolle auch bei besonderen Schiefstellungen zwischen dem Rollenzapfen und der Lageroberfläche nicht beeinträchtigt wird und dass der Lagerkörper mit den Lagerflächen stets symmetrisch zu einer belastenden Kraftresultierenden ausrichtbar ist.

Diese Aufgabe wird durch den Gegenstand des Patentanspruch 1 gelöst. Dieser ist dadurch gekennzeichnet, dass der Lagerkörper in dem Einbaustück um eine zweite Schwingachse schwenkbar gelagert ist und dass die Buchse zusammen mit dem darin gelagerten Einbaustück und dem Lagerkörper in dem Rollenarm um eine Achse, welche senkrecht auf den Achsen S1 und S2 steht, schwenkbar gelagert und auf einem bestimmten Verdrehwinkel fest einstellbar ist.

Die kardanische Ausgestaltung des Rollenlagers bietet den Vorteil, dass die Rollen bzw. der Rollenzapfen in dem Rollenlager nicht nur um die Rollenachse drehbar gelagert ist, sondern zusätzlich auch in mindestens einem weiteren Freiheitsgrad bewegbar ist, ohne dass die Qualität der Lagerung zum Beispiel durch eine erhöhte Reibung nachteilig beeinflusst werden würde.

Die Möglichkeit zur Rotation der Rolle um ihre eigene Rollenachse wird nachfolgend als erster Freiheitsgrad bezeichnet. Die darüber hinaus beanspruchte Möglichkeit zum Schwenken des Lagerkörpers in dem Einbaustück um die zweite Schwenkachse S2 repräsentiert einen weiteren Freiheitsgrad für die Rolle, nachfolgend dritter Freiheitsgrad genannt.

Die Möglichkeit zum Verdrehen der Buchse zusammen mit dem darin gelagertten Einbaustück und dem Lagerkörper in dem Rollenarm um einen bestimmten Verdrehwinkel α um die Mittelachse der zylinderförmigen Buchse bietet den Vorteil, dass der Lagerkörper mit den Lagerflächen symmetrisch zu einer Kraftresultierenden ausgerichtet werden kann, welche sich aufgrund der von dem umgelenkten Metallband auf die Rolle ausgeübten Zugkräfte einstellt und auf das Rollenlager wirkt. Die resultierende Kraft wirkt nicht immer senkrecht zur Badoberfläche nach oben, sondern ihre Richtung hängt primär ab von dem Einlauf und dem Auslaufwinkel des Metallbandes um die Rolle.

Gemäß einem ersten Ausführungsbeispiel des Rollenlagers ist dieses gekennzeichnet durch eine in dem Rollenarm gelagerte Buchse mit einer Öffnung zur Aufnahme des Rollenzapfens und ein Einbaustück, wobei das Einbaustück in der Buchse um eine erste Schwenkachse S1 schwenkbar gelagert ist. Die Möglichkeit zum Schwenken um die Schwenkachse S1 repräsentiert einen weiteren zweiten Freiheitsgrad für die Rolle. Insgesamt stehen der Rolle in diesem Falle somit drei Freiheitsgrade zur Verfügung.

Die Ausbildung von zwei V-förmig angeordneten Lagerflächen auf dem Lagerkörper bietet den Vorteil, dass der Rollenzapfen bei seiner Lagerung auf dem Lagerkörper in seiner örtlichen bzw. räumlichen Position auch während einer durchgeführten Drehbewegung stabilisiert wird.

Eine Ausbildung des Lagerkörpers, zumindest jedoch der Lagerflächen aus Keramik bietet den Vorteil eines geringen Verschleißes bei gleichzeitig hoher Temperaturfestigkeit.

Vorteilhafterweise sind die Lagerkörper, zumindest jedoch die Lagerflächen als Verschleißteile auswechselbar.

Es ist ausreichend, wenn das Einbaustück und/oder der Lagerkörper nicht vollumfänglich am Rand der Öffnung der Buchse, sondern nur auf der Belastungsseite des Rollenlagers angeordnet sind, weil nur dort während des Betriebs der Schmelztauchbeschichtungsanlage, das heißt während der Umlenkung des Metallbandes in dem Metallbad durch die Rolle, eine Kraft auf die Lagerflächen ausgeübt wird.

Der Rollenzapfen ist in der Öffnung der Rollenbuchse lose, das heißt frei drehbar gelagert. Im Belastungsfalle, das heißt bei Auftreten der resultierenden Zugkraft durch das umgelenkte Metallband wird der Rollenzapfen von unten gegen die besagten Lagerflächen gedrückt; bei Fehlen dieser resultierenden Zugkraft, das heißt bei Nicht-Betrieb der Schmetztauchbeschichtungsantage fällt der Rollenzapfen mit der Rolle auf den tiefsten Punkt der Öffnung in der Buchse herab und er hat dann in der Regel keinen Kontakt mehr zu den Lagerflächen. Weil die Öffnung der Buchse größer ist als der Durchmesser des Rollenzapfens fällt die bewegliche Rollenachse in der Regel nicht mit der Mittelachse der zylinderförmigen Buchse zusammen.

Das beschriebene Rollenlager gemäß der vorliegenden Erfindung ist nicht nur für Umlenkrollen, sondern auch für Korrigierrollen oder Stabilisierungsrollen zur Führung des Metallbandes innerhalb oder außerhalb des Metallbades geeignet.

Weitere vorteilhafte Ausgestaltungen der Erfindung sind Gegenstand der abhängigen Ansprüche.

Der Beschreibung sind insgesamt vier Figuren beigefügt, wobei
- Figur 1: Rollenarme mit Rollen eingetaucht in das Metallbad einer Schmelztauchbeschichtungsanlage;
- Figur 2: den Aufbau des erfindungsgemäßen Rollenlagers im Detail;
- Figur 3: eine erste Querschnittsansicht der in den Rollenarmen gelagerten Rolle; und
- Figur 4: eine zweite Querschnittsansicht der in den Rollenarmen gelager- ten Rolle
zeigt.

Die Erfindung wird nachfolgend anhand der Figuren in Form von Ausführungsbeispielen detailliert beschrieben.

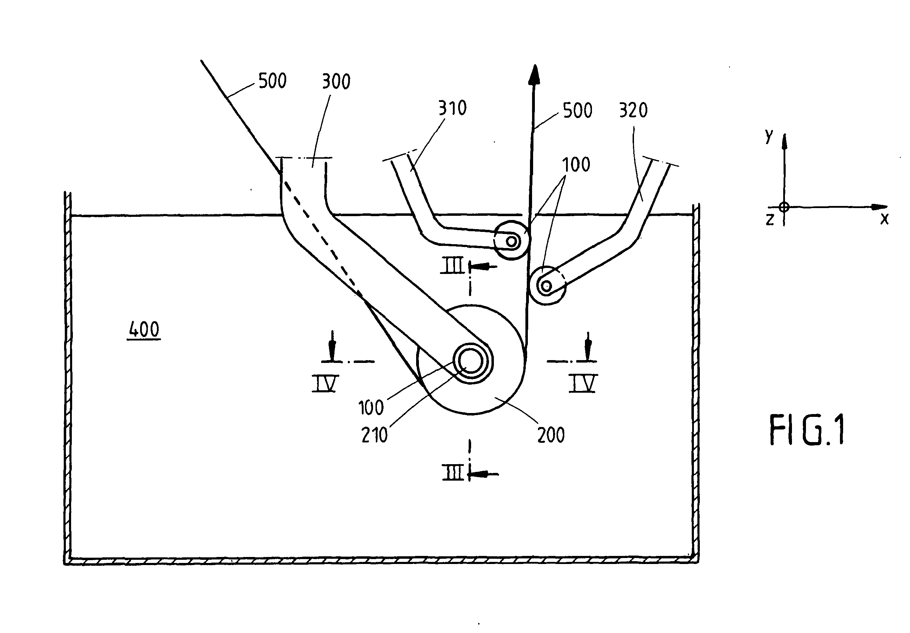

Figur 1 zeigt wesentliche Teile einer Schmelztauchbeschichtungsanlage, nämlich ein Metallbad 400 mit darin enthaltenem flüssigen Metall zum Beschichten eines Bandes 500, insbesondere eines Metallbandes. An einem Rollenarm 300 gelagert, ist eine Rolle 200 in das Metallbad 400 eingetaucht. Die Rolle ist über ein erfindungsgemäßes Rollenlager 100 an dem Rollenarm 300 gelagert. Die Rolle 200 in Figur 1 dient zum Umlenken eines Metallbandes 500 in dem Metallbad. Neben dem großen Rollenarm 300 sind in Figur 1 kleinere Rollenarme 310, 320 gezeigt, an denen mit Hilfe des erfindungsgemäßen Rollenlagers 100 Korrigierrollen oder Stabilisierungsrollen zum Führen des Metallbandes 500 gelagert sind.

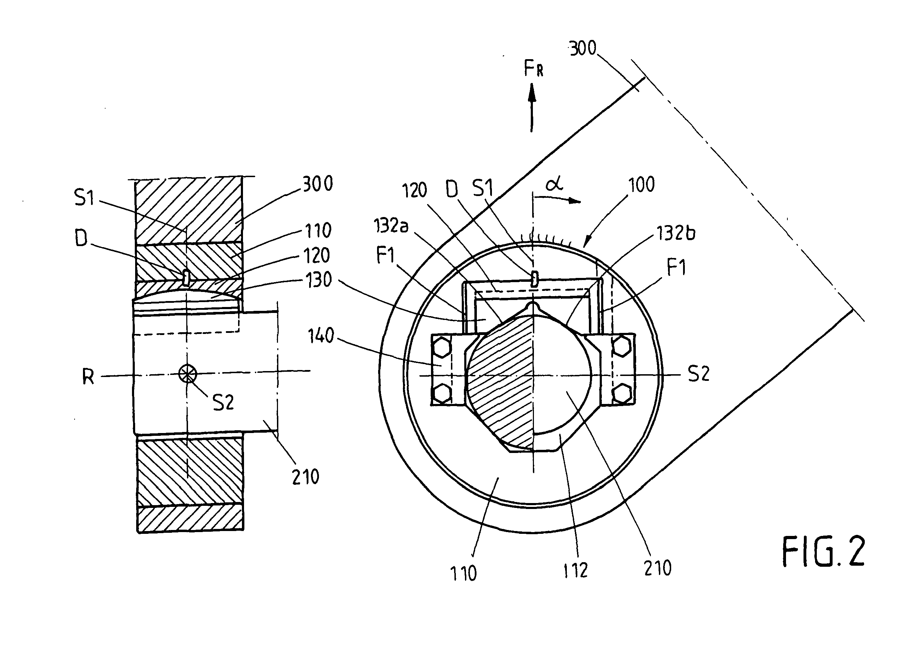

Figur 2 veranschaulicht den konstruktiven Aufbau des erfindungsgemäßen Rollenlagers 100. Das Rollenlager 100 ist kardanisch ausgebildet und bietet eine Bewegungsmöglichkeit für die Rolle 200 bzw. für den Rollenzapfen 210 in mehreren Freiheitsgraden.

In Figur 2 ist das untere Ende des Rollenarmes 300 gezeigt in dem eine Buchse 110 mit einer Öffnung 112 zur Aufnahme des Rollenzapfens 210 gelagert ist. Der Rollenzapfen 210 ist in der Öffnung 112 um die Rollenachse R frei drehbar gelagert. Eventuell vorhandenes Spiel zwischen der Außenseite des Rollenzapfens und der Innenseite der Öffnung ist unschädlich. Die Möglichkeit zur Drehung um die Rollenachse repräsentiert einen ersten Freiheitsgrad für die Bewegungen der Rolle 200.

Gemäß einem ersten Ausführungsbeispiel ist in der Buchse ein Einbaustück 120 um eine erste Schwenkachse S1 drehbar gelagert. Die Drehung erfolgt beispielsweise um einen Drehbolzen D. In diesem Fall sind die gegenüberliegenden und rotationssymmetrisch zu der ersten Schwenkachse angeordneten Flächen F gerundet bzw. zylinderförmig ausgebildet, um die Schwenkbewegung des Einbaustückes innerhalb der Buchse überhaupt zu ermöglichen. Die Möglichkeit zum Schwenken um die erste Schwenkachse S1 repräsentiert einen zweiten Freiheitsgrad für die Rolle 200.

Gemäß einem weiteren Ausführungsbeispiel ist ein Lagerkörper 130 für den Rollenzapfen in dem Einbaustück 120 um eine zweite Schwenkachse S2 schwenkbar gelagert. Zum ermöglichen dieser Schwenkbewegung sind die gegenüberliegenden Flächen von Einbaustück 120 und Lagerkörper 130 gerundet, dass heißt zylinderförmig gegenüber der Schwenkachse S2 ausgebildet. Die Möglichkeit zum Schwenken um die Schwenkachse S2 repräsentiert einen dritten Freiheitsgrad für die Rolle.

Die soeben beschriebenen Ausführungsbeispiele zur Realisierung des zweiten und dritten Freiheitsgrades können jeweils einzeln aber auch in Kombination miteinander in dem Rollenlager realisiert sein, wie dies in Figur 2 veranschaulicht ist.

Der Lagerkörper 130 weist zwei V-förmig angeordnete Lagerflächen 132a, 132b auf, auf denen der Rollenzapfen 210 insbesondere bei Belastung durch das umgelenkte Metallband 500 drehbar gelagert ist. Bei dem in Figur 2 gezeigten Ausführungsbeispiel wird der Rollenzapfen 210 von unten gegen die V-förmig angeordneten Lagerflächen 132a, 132b gedrückt. Dieses Andrücken des Rollenzapfens bzw. der Rolle erfolgt durch eine resultierende Kraft F_{R}, welche durch das von der Rolle umgelenkte Metallband auf die Rolle und den Rollenzapfen ausgeübt wird und welche in Figur 2 beispielhaft senkrecht nach oben in Pfeilrichtung wirkt. In diesem Betriebszustand kann zum Boden der Öffnung 112 hin durchaus Spiel vorhanden sein, wie dies in Figur 2 angedeutet ist. Der Lagerkörper 130 kann entweder einstückig oder vorzugsweise zweistückig ausgebildet sein, wobei dann jeweils ein Teil des Lagerkörpers die Lagerflächen 132a und 132b aufweist. Vorzugsweise sind die Lagerkörper, zumindest jedoch die Lagerflächen als Verschleißteile auswechselbar in dem Rollenlager angeordnet. Die Lagerkörper 130, zumindest jedoch die Lagerflächen 132a, 132b sind vorzugsweise aus Keramik gefertigt, weil Keramik zum einen besonders hart und damit besonders verschließfest ist und zum anderen den hohen Umgebungstemperaturen, wie sie innerhalb des Metallbades herrschen, standhalten kann. Das Einbaustück und der Lagerkörper sind mit Hilfe von Fixiermitteln 140 auf der Belastungsseite der Öffnung 112 in der Buchse 110 fixiert ist. Die Belastungsseite ist diejenige Seite, gegen welche der Rollenzapfen bei Umlenkung des Metallbandes aufgrund der resultierenden Zugkraft F_{R} gedrückt wird.

In Figur 2 ist zu erkennen, dass die Buchse 110 in dem Rollenarm drehbar gelagert ist. Konkret ist die Buchse auf einen vorbestimmbaren Verdrehwinkel α ausrichtbar. Dabei wird die Buchse in die Richtung der resultierenden Zugkraft F_{R} ausgerichtet, wobei die Richtung dieser resultierenden Zugkraft von den Winkeln abhängig ist, mit denen das Metallband in das Metallbad eintaucht, bevor es durch die Rolle 200 umgelenkt wird und von dem Ausfallswinkel, mit dem das Metallband das Metallbad verlässt, nachdem es von der Rolle 200 umgelenkt wurde. Ausgerichtet ist das erfindungsgemäße Rollenlager dann, wenn die Richtung der ersten Schwenkachse S1 mit der Richtung der Zugkraft F_{R} übereinstimmt. Das Ausrichten hat den Vorteil, dass die beiden V-förmigen Lagerflächen 132a, 132b während des Betriebs der Schmelztauchbeschichtungsanlage bei Belastung durch den Rollenzapfen bei Umlenkung des Metallbandes 500 gleichermaßen stark belastet werden.

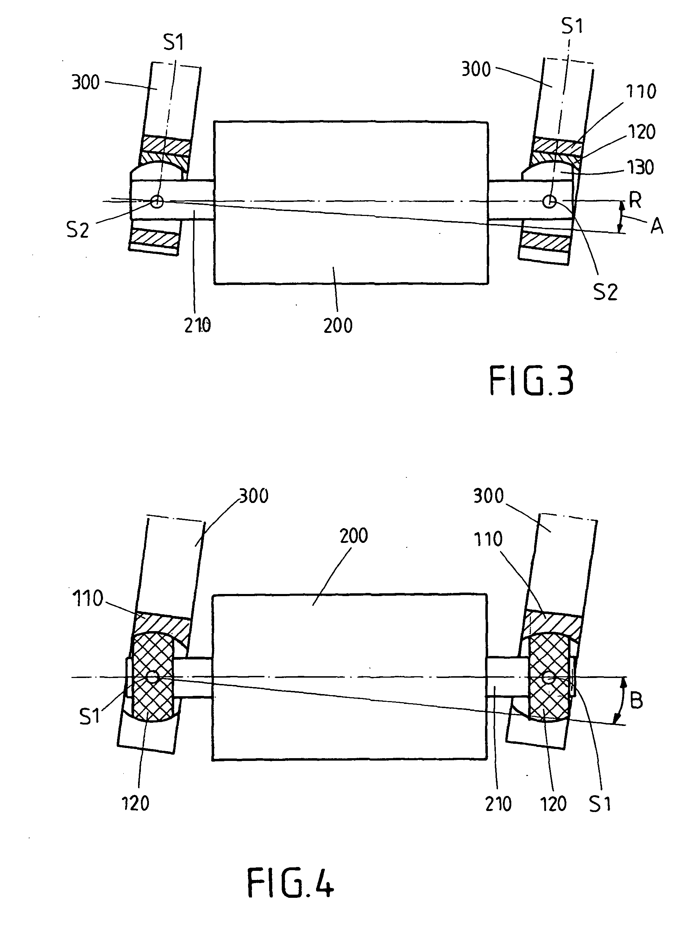

Figur 3 zeigt einen Querschnitt durch die Rollenarme 300 mit dazwischen gelagerter Rolle 200 in der Schnittebene III-III gemäß Figur 1.

Figur 3 zeigt eine Schiefstellung der Rollenarme 300 in Blickrichtung III. Figur 3 zeigt, wie in diesem Fall das Rollenlager 100 diese Schiefstellung der Rollenarme 300 kompensiert ohne das dadurch die Lagerung der Rolle 200 bzw. der Rollenzapfen 210 beeinträchtigt werden würde. Konkret wird in diesem Fall insbesondere der dritte Freiheitsgrad wirksam, in dem der Lagerkörper 130 gegenüber dem Einbaustück um die zweite Schwenkachse S2 um den Winkel A ausschwenkt.

Im Unterschied zu Figur 3 zeigt Figur 4 eine Draufsicht auf die in Figur 1 gezeigte Anordnung in der Schnittebene IV-IV. Bei einer Schiefstellung der Rollenarme 300 aus dieser Perspektive, dass heißt in der X-Z-Ebene, wird der zweite Freiheitsgrad wirksam, in dem das Einbaustück 120 gegenüber der Buchse 110 um die erste Schwenkachse S1 drehbar verlagert ist. Auch in diesem Fall erfolgt eine Kompensation der besagten Schiefstellung der Rollenarme 300 durch das kardanische Rollenlager. Bei einer Realisierung des ersten, zweiten und dritten Freiheitsgrades in dem Rollenlager durch die in Figur 2 gezeigte Ausführung ist eine verbesserte, reibungsfreiere Lagerung der Rolle unabhängig von der Schiefstellung der Rollenarme möglich.

## Patentansprüche

1. Rollenlager (100) zur Lagerung eines Rollenzapfens (210) einer Rolle (200) in einem Rollenarm (300) einer Schmelztauchbeschichtungsanlage, wobei die Rolle (200) mit Hilfe des Rollenarms (300) in ein Metallbad (400) eintauchbar ist und dort zur Führung eines das Metallbad durchlaufenden Bandes (500) dient;
wobei das Rollenlager (100) kardanisch ausgebildet ist zur kardanischen Lagerung um eine erste Schwenkachse (S1) des Rollenzapfens (210); und
wobei eine in dem Rollenarm (300) gelagerte Buchse (110) mit einer Öffnung (112) zur Aufnahme des Rollenzapfens (210), ein Einbaustück (120) und mindestens einen Lagerkörper (130) für den Rollenzapfen (210) vorgesehen ist;
**dadurch gekennzeichnet, dass**
der Lagerkörper (130) in dem Einbaustück (120) um eine zweite Schwenkachse (S2) schwenkbar gelagert ist; und
die Buchse (110) zusammen mit dem darin gelagerten Einbaustück (120) und dem Lagerkörper (130) in dem Rollenarm (300) um die Rollenachse (R),
welche senkrecht auf die erste (S1) und zweite Schwenkachse (S2) steht, schwenkbar gelagert und auf einen bestimmten Verdrehwinkel (α) fest einstellbar ist.

2. Rollenlager (100) nach Anspruch 1,
**gekennzeichnet durch**
eine in dem Rollenarm (300) gelagerte Buchse (110) mit einer Öffnung (112) zur Aufnahme des Rollenzapfens (210) und ein Einbaustück (120), wobei das Einbaustück in der Buchse um eine erste Schwenkachse (S1) schwenkbar gelagert ist.

3. Rollenlager (100) nach Anspruch 1,
**dadurch gekennzeichnet,**
**dass** das Einbaustück (120) in der Buchse (110) um eine erste Schwenkachse (S1), welche senkrecht zur Schwenkachse (S2) steht, schwenkbar gelagert ist.

4. Rollenlager (100) nach Anspruch 1,
**dadurch gekennzeichnet,**
**dass** der Lagerkörper (130) zwei V-förmig angeordnete Lagerflächen (132a, 132b) aufweist auf denen der Rollenzapfen (210) der Rolle (200) insbesondere bei Belastung durch das umgelenkte Metallband (500) drehbar gelagert ist.

5. Rollenlager (100) nach Anspruch 4,
**dadurch gekennzeichnet,**
**dass** der Lagerkörper (130a, 130b) zweiteilig ausgebildet ist und wobei die beiden Lagerflächen (132a, 132b) jeweils einem Teil des Lagerkörpers zugeordnet sind.

6. Rollenlager (100) nach Anspruch 4 oder 5,
**dadurch gekennzeichnet,**
**dass** der Lagerkörper (130), zumindest jedoch die Lagerflächen, aus Keramik gefertigt sind.

7. Rollenlager (100) nach Anspruch 5,
**dadurch gekennzeichnet**,
der mindestens eine Lagerkörper (130) als Verschleißteil auswechselbar ist.

8. Rollenlager (100) nach einem der Ansprüche 3 bis 7,
**dadurch gekennzeichnet,**
**dass** das Einbaustück (120) und/oder der Lagerkörper (130) nur auf der Belastungsseite des Rollenlagers zur Aufnahme der Andrückkräfte des Rollenzapfens (210) bei Umlenkung des Metallbandes ausgebildet sind; und
**dass** das Einbaustück (120) und der Lagerkörper (130) mit Fixiermitteln (140) auf der Belastungsseite des Rollenlagers fixiert sind.

9. Rollenlager (100) nach Anspruch 1,
**dadurch gekennzeichnet,**
**dass** der Verdrehwinkel (α) so gewählt ist, dass die beiden V-förmigen Lagerflächen (132a, 132b) während des Betriebs der Schmelztauschbeschichtungsanlage bei Belastung durch den Rollenzapfen (210) bei Umlenkung des Metallbandes (500) gleichermaßen stark belastet sind.

## Claims

1. Roll bearing (100) for journalling a roll pin (210) of a roll (200) in a roll arm (300) of a hot-dip coating plant, wherein the roll (200) can dip into a metal bath (400) with the help of the roll arm (300) and serves there for guidance of a strip (500) running through the metal bath, wherein the roll bearing (100) is of cardanic construction for cardanic mounting about a first pivot axis (S1) of the roll pin (210) and wherein a bush (110) mounted in the roll arm (300) is provided with an opening (112) for receiving the roll pin (210), a chock (120) and at least one bearing body (130) for the roll pin (210), **characterised in that** the bearing body (130) is mounted in the chock (120) to be pivotable about a second pivot axis (S2) and the bush (110) together with the chock (120) mounted therein and the bearing body (130) is mounted in the roll arm (300) to be pivotable about the roll axis (R), which is perpendicular to the first pivot axis (S1) and second pivot axis (S2), and is fixedly settable at a defined rotational angle (α).

2. Roll bearing (100) according to claim 1, **characterised by** a bush (110), which is mounted in the roll arm (300), with an opening (112) for receiving the roll pin (210) and a chock (120), wherein the chock is mounted in the bush to be pivotable about a first pivot axis (S1).

3. Roll bearing (100) according to claim 1, **characterised in that** the chock (120) is mounted in the bush (110) to be pivotable about a first pivot axis (S1) perpendicular to the pivot axis (S2).

4. Roll bearing (100) according to claim 1, **characterised in that** the bearing body (130) has two bearing surfaces (132a, 132b) which are arranged in V-shape and on which the roll pin (210) of the roll (200) is mounted to be rotatable particularly in a case of loading by the deflected metal strip (500).

5. Roll bearing (100) according to claim 4, **characterised in that** the bearing body (130a, 130b) is of two-part construction and wherein the two bearing surfaces (132a, 132b) are each associated with the respective part of the bearing body.

6. Roll bearing (100) according to claim 4 or 5, **characterised in that** the bearing body (130) is, but at least the bearing surfaces are, made of ceramic.

7. Roll bearing (100) according to claim 5, **characterised in that** the at least one bearing body (130) is exchangeable as a wear part.

8. Roll bearing (100) according to any one of claims 3 to 7, **characterised in that** the chock (120) and/or the bearing body (130) is or are constructed only on the load side of the roll bearing for acceptance of the pressing forces of the roll pin (210) during deflection of the metal strip and that the chock (120) and the bearing body (130) is or are fixed on the load side of the roll bearing by fixing means (140).

9. Roll bearing (100) according to claim 1, **characterised in that** the rotational angle (α) is so selected that the two V-shaped bearing surfaces (132a, 132b) are during operation of the hot-dip coating plant loaded to the same extent when the roll pin (210) is loaded during deflection of the metal strip (500).

## Revendications

1. Roulement à rouleaux (100) pour le logement d'un tourillon (210) d'un rouleau (200) dans un bras (300) d'une installation de dépôt en bain fondu, le rouleau (200) étant à même de s'immerger à l'aide du bras (300) dans un bain métallique (400) et servant à guider à cet endroit un ruban (300) traversant le bain métallique ;
dans lequel le roulement à rouleaux (100) est réalisé à la manière d'un cardan pour le logement cardanique d'un premier axe de pivotement (S1) du tourillon (210) ; et
dans lequel on prévoit une douille (110) montée dans le bras (300), comportant une ouverture (112) pour la réception du tourillon (210), une pièce rapportée (120), et au moins un corps de palier (130) pour le tourillon (210);
**caractérisé en ce que**
le corps de palier (130) est monté dans la pièce rapportée (120) en pivotement autour d'un deuxième axe de pivotement (82) ; et
la douille (110) est montée conjointement avec la pièce rapportée (120) qui y est montée et avec le corps de palier (130) dans le bras (300) en pivotement autour de l'axe du rouleau (R) qui est disposé en position perpendiculaire sur le premier axe de pivotement (S1) et sur le deuxième axe de pivotement (S2), et peut être réglée pour être bloquée en formant un angle de rotation déterminé (α).

2. Roulement à rouleaux (100) selon la revendication 1, **caractérisé par**
une douille (110) montée dans le bras (300), comportant une ouverture (112) pour la réception du tourillon (210), et une pièce rapportée (120), la pièce rapportée étant montée dans la douille en pivotement autour d'un premier axe de pivotement (S1).

3. Roulement à rouleaux (100) selon la revendication 1, **caractérisé par**
**le fait que** la pièce rapportée (120) est montée dans la douille (110) en pivotement autour d'un premier axe de pivotement (S1) qui est disposé perpendiculairement à l'axe de pivotement (S2).

4. Roulement à rouleaux (100) selon la revendication 1, **caractérisé par**
**le fait que** le corps de palier (130) présente deux surfaces de palier (132a, 132b) disposées en V, sur lesquelles le tourillon (210) du rouleau (200) est monté en pivotement, en particulier dans le cas d'une sollicitation de la part du ruban métallique (500) qui a changé de direction.

5. Roulement à rouleaux (100) selon la revendication 4, **caractérisé par**
**le fait que** le corps de palier (130a, 130b) est réalisé en deux parties, les deux surfaces de palier (132a, 132b) étant attribuées respectivement à une partie du corps de palier.

6. Roulement à rouleaux (100) selon la revendication 4 ou 5, **caractérisé par**
**le fait que** le corps de palier (130), en tout cas au moins en ce qui concerne les surfaces de palier, est réalisé en céramique.

7. Roulement à rouleaux (100) selon la revendication 6, **caractérisé par**
ledit au moins un corps de palier (130) peut faire l'objet d'un échange à titre de pièce d'usure.

8. Roulement à rouleaux (100) selon l'une quelconque des revendications 3 à 7, **caractérisé par le fait que** la pièce rapportée (120) et/ou le corps de palier (130) ne sont réalisés que du côté du roulement à rouleaux où s'exerce la sollicitation pour l'absorption des forces de pression du tourillon (210) lors du changement de direction du ruban métallique ; et
**le fait que** la pièce rapportée (120) et le corps de palier (130) sont fixés avec des moyens de fixation (140) du côté du roulement à rouleaux où s'exerce la sollicitation.

9. Roulement à rouleaux (100) selon la revendication 1, **caractérisé par**
**le fait que** l'angle de rotation (α) est sélectionné de telle sorte que les deux surfaces de palier en V (132a, 132b), lors de la mise en service de l'installation de dépôt en bain fondu, sont soumises à une charge d'intensité égale lorsqu'elles sont sollicitées par le tourillon (210) lors du changement de direction du ruban métallique (500).
